# EUROPÄISCHE PATENTSCHRIFT

(11) **EP 3 587 098 B1**
(45) Veröffentlichungstag und Bekanntmachung des Hinweises auf die Patenterteilung: **23.12.2020**
(21) Anmeldenummer: 19176183.2
(22) Anmeldetag: 23.05.2019
(51) Int. Cl.: B32B 3/28, B32B 5/18, B32B 7/02, B32B 7/12, B32B 27/06, B32B 27/08, B32B 27/32, B32B 27/36, E04F 13/08, E04B 1/76, E04F 13/18

(54) **WANDABDECKUNG FÜR EINE KÜCHE**
WALL COVERAGE FOR A KITCHEN
COUVERTURE MURALE POUR UNE CUISINE

(30) Priorität: 25.06.2018 DE 202018103571 U
(43) Veröffentlichungstag der Anmeldung: 01.01.2020
(73) Patentinhaber: Pohlmann, Hubertus, 21640 Bliedersdorf (DE)
(72) Erfinder: Pohlmann, Hubertus, 21640 Bliedersdorf (DE)
(74) Vertreter: Straube, Urs Norman

(56) Entgegenhaltungen:
- EP-A1- 3 281 783
- DE-A1- 2 238 435
- DE-A1- 2 443 908
- DE-A1- 2 900 583
- DE-B3-102008 046 878
- KR-A- 20180 107 950

## Beschreibung

### Gebiet der Erfindung

Die Erfindung betrifft eine Wandabdeckung für den Kochbereich einer Küche.

### Hintergrund der Erfindung

In Küchen werden in den sogenannten "Kochnischen" häufig Fliesen verbaut. Die Kochnische ist der Teil der Wand, welche sich zwischen den unteren Küchenschränken mit dem Herd und den oberen Küchen-Hängeschränken befindet. Bei Neubauten sind im Bereich der Kochnischen unter anderem mit Mineralputz verputzte Wände, rohe Kalksandsteinmauern, Wände aus Gipskarton oder Raufasertapeten üblich. In Bestandsbauten werden auch Klinker oder Fliesen verwendet.

Um eine Kochnische beim Neubau oder einer Renovierung auch optisch attraktiv zu gestalten, werden großflächige, einteilige Wandabdeckungen im Bereich Kochnische verbaut. Die Wandabdeckungen sind hinsichtlich ihrer Maße auf die Kochnische abgestimmt. Dabei lassen sind starre Platten aus Glas, Plexiglas, Holz oder Aluminium und flexible Folien im Handel erhältlich. Einen solchen Stand der Technik offenbart die DE2443908, wobei eine Fliese (1) aus zum Beispiel keramischem Material auf ihrer Rückseite mit sowohl elastischer Schicht (2) als auch einer Klebeschicht (3) bedeckt ist, mittels derer die Fliese (1) auch an einer unebenen Wand (4) haftet. Die flexiblen Folien bestehen allerdings aus einem homogenen Material, meist PVC, mit einer dünnen Klebeschicht. Die mechanische Biegesteifigkeit der bekannten Folien ist gering. Dadurch legt sich das Material von alleine oder durch das Andrücken bei Montage in die Fugen, Sicken und Unebenheiten hinein, wodurch lokale Vertiefungen entstehen. Bei unregelmäßig verlegten Fliesen drücken deren Kanten durch die Folie. Strukturierte Oberflächen wie Raufasertapeten drücken sich ebenfalls vollständig durch die Folie durch. Wenn die Folie dicker gewählt wird kann es diese Strukturen zum Teil überdecken, lokale Unebenheiten drücken sich aber weiterhin durch. Außerdem klebt dann die Folie nur an den Spitzen der Struktur. Somit ist die Haftung nicht gewährleistet. Weiterhin schrumpfen Kunststoffe mit der Zeit, wodurch am Klebeverbund Scherkräfte entstehen. Die Folie kann sich dann selbständig von der Wand lösen, wenn die Scherkraft größer als die Klebekraft ist.

### Zusammenfassung der Erfindung

Die vorliegende Erfindung wurde vor dem Hintergrund des vorstehend beschriebenen Stands der Technik entwickelt. Aufgabe der Erfindung ist es, eine Wandabdeckung für eine Küche vorzuschlagen, die die genannten Nachteile nicht aufweist.

Diese Aufgabe wird dadurch gelöst, dass die Wandabdeckung einen Mehrschichtverbund mit folgenden Schichten umfasst: eine obere Schicht aus hartem Kunststoff, eine gleichartige untere Schicht aus hartem Kunststoff, eine zwischen diesen beiden Schichten angeordnete Kernschicht aus druckfestem Kunststoff, eine an der unteren Schicht aus hartem Kunststoff angeordnete weichere Schaumstoffschicht, und eine an der Schaumstoffschicht angeordnete, untere Klebeschicht zum Aufkleben auf eine Küchenwand. Durch den Mehrschichtverbund der beiden Schichten aus hartem Kunststoff und der mittleren Kernschicht erhöht sich die mechanische Biegesteifigkeit erheblich, und zwar etwa um das Dreifache im Vergleich mit einer gleich starken aber homogenen bzw. einschichtigen Folie. Durch die erhöhte Biegesteifigkeit der oberen drei Schichten bleibt die Oberfläche der Wandabdeckung eben, auch wenn die Wand Erhebungen oder Vertiefungen aufweist. Die Schaumstoffschicht ist plastisch verformbar und füllt Erhebungen und Vertiefungen der Wandoberfläche aus, wodurch der Effekt der Ebenheit verstärkt wird. Ein weiterer Vorteil besteht darin, dass sich die Klebeschicht ebenfalls der strukturierten Oberfläche der Wandoberfläche anschmiegt, wodurch die effektive Klebefläche vergrößert wird. Dadurch wird die Haftung der Wandabdeckung an der Wandoberfläche verbessert. Die Wandabdeckung ist in ihren Maßen auf die Kochnische abgestimmt und kann zum Beispiel eine Größe von 60 cm mal 300 cm oder 60 cm mal 400 cm aufweisen.

Vorteilhafte Ausgestaltungen der Erfindung mit nicht beschränkenden zusätzlichen Merkmalen werden nachfolgend beschrieben.

Wenn die obere Schicht und die gleichartige untere Schicht jeweils aus Polypropylen (PP) und die Kernschicht aus Polyethylenterephthalat (PET) besteht, wird eine Materialschrumpfung reduziert. Die restlichen mit der Zeit auftretenden Scherkräfte werden von der flexiblen Schaumstoffschicht absorbiert. Somit kommt es zu keinem Abriss der Klebeschicht vom Untergrund bzw. der Küchenwand.

Die Stärke der oberen Schicht und der unteren Schicht sowie der Kernschicht beträgt zusammen etwa 0,25 bis 0,5 Millimeter.

Vorteilhafterweise bestehen die Schaumstoffschicht aus Polyethylen-Schaum und/oder die äußere Klebeschicht aus Acrylatklebemittel oder Kautschuk-Klebemittel.

Die Stärke der Schaumstoffschicht beträgt ein bis drei Millimeter und/oder die Stärke der Klebeschicht etwa 10 Mikrometer.

Das Material, die Materialstärke und deren Anordnung in Schichten sind so gewählt, dass die Wandabdeckung trotz erhöhter Biegesteifigkeit aufrollbar ausgebildet ist. Dadurch kann sie Platz sparend gelagert und im Vergleich zu Glasplatten günstig versendet bzw. transportiert werden.

Die obere Schicht weist ein graphisches Motiv oder eine Abbildung als Verzierung auf.

### Kurze Beschreibung der Zeichnung

Die Figur zeigen im Einzelnen:
- Figur 1: die Wandabdeckung im Schnitt; und
- Figur 2: die an einer Küchenwand befestigte Wandabdeckung im Schnitt.

Funktionsmäßig gleiche Teile sind mit denselben Bezugszeichen versehen.

### Detaillierte Beschreibung einer bevorzugten Ausführungsform

Nachfolgend wird eine beispielhafte Ausführungsform der Erfindung unter Bezugnahme auf die Zeichnungen detailliert beschrieben, wobei den Zeichnungen weitere vorteilhafte Merkmale zu entnehmen sind.

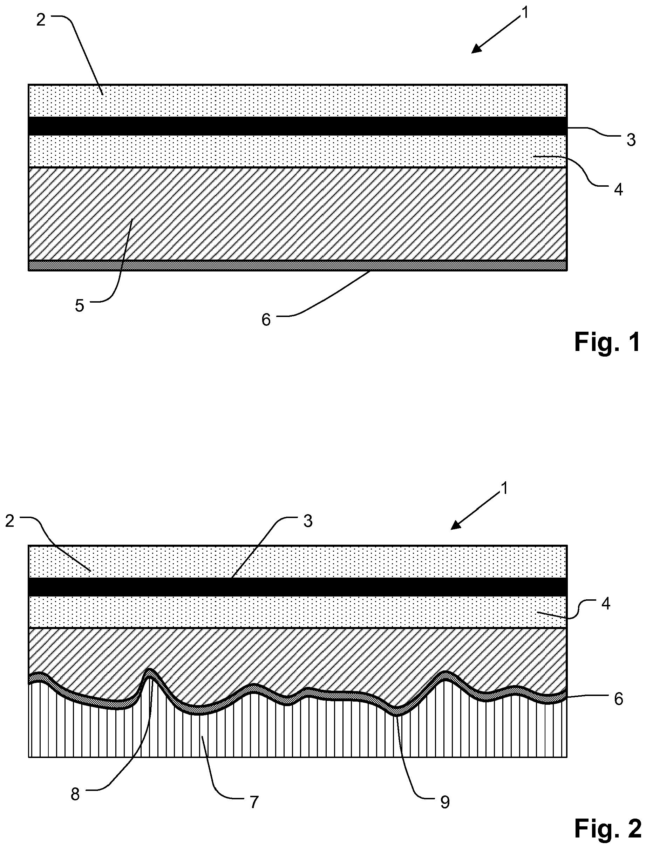

Figur 1 zeigt die Wandabdeckung 1 im Schnitt. Die Wandabdeckung 1 umfasst einen Mehrschichtverbund mit folgenden Schichten: Eine oberste Schicht 2 aus hartem Kunststoff, nämlich Polypropylen (PP), eine gleiche untere Schicht 4 aus Polypropylen (PP) und eine zwischen diesen beiden Schichten 2, 4 angeordnete, dünnere Kernschicht 3 aus leichtem und druckfestem Polyethylenterephthalat (PET). Durch diesen Mehrschichtverbund erhöht sich die mechanische Biegesteifigkeit im Vergleich mit einem gleich starken, homogenen Material etwa um den Faktor drei. Die Stärke bzw. Dicke der drei Schichten beträgt zusammen etwa 0,5 Millimeter. Die oberste Schicht 2 weist ein graphisches Motiv bzw. eine Abbildung auf.

An der unteren Hartschicht 4 ist eine weiche Schicht aus Schaumstoff 5 befestigt. Die Schaumstoffschicht 5 weist eine Stärke bzw. Dicke von ein bis drei Millimetern auf und besteht aus Polyethylen, auch PE-Schaum genannt. An der Schaumstoffschicht 5 ist eine unterste, äußere Klebeschicht 6 aus Acrylatklebemittel angeordnet. Die Stärke bzw. Dicke der Klebeschicht 6 beträgt etwa 10 Mikrometer.

Figur 2 zeigt die an einer Küchenwand 7 befestigte Wandabdeckung 1 im Schnitt. Der Aufbau der Wandabdeckung 1 entspricht der in Figur 1 gezeigten Ausführungsform. In der Figur 2 ist zusätzlich eine unregelmäßige, strukturierte Wandoberfläche 7 gezeigt. Dies kann zum Beispiel die Oberfläche einer Raufasertapete, Wandputz oder ein unregelmäßig verlegter Fliesenspiegel sein. Die weiche Schaumstoffschicht 5 legt sich den Erhebungen 8 und Vertiefungen 9 der Wandoberfläche 7 an und füllt diese elastisch aus. Dadurch und durch die erhöhte Biegesteifigkeit der oberen drei Schichten 2, 3, 4 werden die Erhebungen 8 und Vertiefungen 9 ausgeglichen, sodass die Oberfläche 2 der Wandabdeckung 1 völlig eben ist. Da sich, wie die Figur 2 zeigt, die Klebeschicht 6 ebenfalls der strukturierten Oberfläche der Wandoberfläche 7 anschmiegt, wird zudem die effektive Klebefläche vergrößert. Dadurch ist die Haftung der Wandabdeckung 1 an der Wandoberfläche 7 deutlich verbessert. Auch beim längeren Gebrauch kommt es deshalb zu keinem Abriss der Klebeschicht 6 bzw. der Wandabdeckung 1 von der Wandoberfläche 7.

### Bezugszeichenliste

- 1.: Wandabdeckung
- 2.: Oberste Hartschicht
- 3.: Kernschicht
- 4.: Untere Hartschicht
- 5.: Schaumstoffschicht
- 6.: Klebeschicht
- 7.: Wandoberfläche
- 8.: Erhebungen
- 9.: Vertiefungen

## Patentansprüche

1. Wandabdeckung (1) für eine Küche, umfassend einen Mehrschichtverbund mit folgenden Schichten: a) eine obere Schicht (2) aus hartem Kunststoff, b) eine gleichartige untere Schicht (4) aus hartem Kunststoff, c) eine zwischen diesen beiden Schichten (2, 4) angeordnete Kernschicht (3) aus druckfestem Kunststoff, d) eine an der unteren Schicht (4) aus hartem Kunststoff angeordnete weichere Schaumstoffschicht (5), und e) eine an der Schaumstoffschicht (5) angeordnete, untere Klebeschicht (6) zum Aufkleben auf eine Küchenwand (7), wobei das Material und die Materialstärke der genannten Schichten so gewählt sind, dass die Wandabdeckung (1) aufrollbar ausgebildet ist.

2. Wandabdeckung (1) für eine Küche nach Anspruch 1, **dadurch gekennzeichnet, dass** die obere Schicht (2) und die gleichartige untere Schicht (4) jeweils aus Polypropylen (PP) bestehen und/oder dass die Kernschicht (3) aus Polyethylenterephthalat (PET) besteht.

3. Wandabdeckung für eine Küche nach einem der vorhergehenden Ansprüche, **dadurch gekennzeichnet, dass** die Stärke der oberen Schicht (2) und der unteren Schicht (4) sowie der Kernschicht (3) zusammen etwa 0,25 bis 0,5 Millimeter beträgt.

4. Wandabdeckung (1) für eine Küche nach einem der vorhergehenden Ansprüche, **dadurch gekennzeichnet, dass** die Schaumstoffschicht (5) aus Polyethylen-Schaum und/oder die äußere Klebeschicht (6) aus Acrylatklebemittel oder Kautschuk-Klebemittel bestehen.

5. Wandabdeckung (1) für eine Küche nach einem der vorhergehenden Ansprüche, **dadurch gekennzeichnet, dass** die Stärke der Schaumstoffschicht (5) ein bis drei Millimeter beträgt und/oder dass die Stärke der Klebeschicht (6) etwa 10 Mikrometer beträgt.

6. Wandabdeckung (1) für eine Küche nach einem der vorhergehenden Ansprüche, **dadurch gekennzeichnet, dass** die obere Schicht (2) ein graphisches Motiv oder eine Abbildung aufweist.

## Claims

1. Wall covering (1) for a kitchen, comprising a multilayer composite with the following layers: a) an upper layer (2) made of hard plastic, b) a similar lower layer (4) made of hard plastic, c) a core layer (3) made of pressure-resistant plastic that is arranged between these two layers (2, 4), d) a softer foam layer (5) made of hard plastic that is arranged on the lower layer (4), and e) a lower adhesive layer (6) for gluing to a kitchen wall (7) that is arranged on the foam layer (5), wherein the material and the material thickness of said layers are selected, such that the wall covering (1) is formed to be rollable.

2. Wall covering (1) for a kitchen according to claim 1, **characterized in that** the upper layer (2) and the similar lower layer (4) each consist of polypropylene (PP) and/or that the core layer (3) consists of polyethylene terephthalate (PET).

3. Wall covering for a kitchen according to one of the preceding claims, **characterized in that** the thickness of the upper layer (2) and the lower layer (4) as well as the core layer (3) together is about 0.25 to 0.5 millimeters.

4. Wall covering (1) for a kitchen according to one of the preceding claims, **characterized in that** the foam layer (5) consists of polyethylene foam and/or the outer adhesive layer (6) consists of acrylate adhesive or rubber adhesive.

5. Wall covering (1) for a kitchen according to one of the preceding claims, **characterized in that** the thickness of the foam layer (5) is one to three millimeters and/or that the thickness of the adhesive layer (6) is about 10 micrometers.

6. Wall covering (1) for a kitchen according to one of the preceding claims, **characterized in that** the upper layer (2) has a graphic motif or an image.

## Revendications

1. Couverture murale (1) pour une cuisine, comprenant un composite multicouche comportant les couches suivantes : a) une couche supérieure (2) à base de matière plastique dure, b) une couche inférieure (4) de même nature à base de matière plastique dure, c) une couche centrale (3) disposée entre ces deux couches (2, 4), à base de matière plastique résistante à la compression, d) une couche de mousse synthétique (5) moins dure disposée sur la couche inférieure (4) à base de matière plastique dure, et e) une couche adhésive inférieure (6) disposée sur la couche de mousse synthétique (5), destinée au collage sur un mur de cuisine (7), le matériau et l'épaisseur de matériau des couches mentionnées étant choisis de telle façon que la couverture murale (1) est conçue pour pouvoir être enroulée.

2. Couverture murale (1) pour une cuisine selon la revendication 1, **caractérisée en ce que** la couche supérieure (2) et la couche inférieure (4) de même nature sont constituées chacune de polypropylène (PP) et/ou **en ce que** la couche centrale (3) est constituée de polyéthylène téréphtalate (PET).

3. Couverture murale pour une cuisine selon l'une quelconque des revendications précédentes, **caractérisée en ce que** l'épaisseur de la couche supérieure (2) et de la couche inférieure (4) ainsi que de la couche centrale (3) ensemble vaut environ de 0,25 à 0,5 millimètre.

4. Couverture murale (1) pour une cuisine selon l'une quelconque des revendications précédentes, **caractérisée en ce que** la couche de mousse synthétique (5) consiste en mousse de polyéthylène et/ou la couche adhésive extérieure (6) consiste en adhésif acrylate ou adhésif à base de-caoutchouc.

5. Couverture murale (1) pour une cuisine selon l'une quelconque des revendications précédentes, **caractérisée en ce que** l'épaisseur de la couche de mousse synthétique (5) vaut de un à trois millimètres et/ou **en ce que** l'épaisseur de la couche adhésive (6) est d'environ 10 micromètres.

6. Couverture murale (1) pour une cuisine selon l'une quelconque des revendications précédentes, **caractérisée en ce que** la couche supérieure (2) présente un motif graphique ou une image.
